# EUROPEAN PATENT APPLICATION

(11) **EP 4 394 907 A1**
(43) Date of publication of application: **03.07.2024**
(21) Application number: 22307066.5
(22) Date of filing: 30.12.2022
(51) Int. Cl.: H01M 4/04, H01M 4/505, H01M 4/525, H01M 4/583, H01M 4/62

(54) **NEW PROCESS FOR MANUFACTURING A DRY ELECTRODE FOR BATTERIES THROUGH AN INTERMEDIATE COMPRESSED FILM**

(71) Applicant: Automotive Cells Company SE, 92300 Levallois Perret (FR); SAFT, 92300 Levallois-Perret (FR)
(72) Inventor: Ben Ali, Imed Eddine, 33100 Bordeaux (FR); Zier, Martin, 33100 Le Bouscat (FR)
(74) Representative: Alatis

(57) **Abstract**

The invention relates to a method for manufacturing a dry electrode for batteries, said method comprising the preparation of a primary film of electrode materials blend which is then calendered and the formed calendered film is laminated on the surfaces of a current collector.

## Description

### TECHNICAL FIELD OF THE INVENTION

The invention belongs to the dry battery electrode manufacturing field. It particularly relates to a solvent-free process of manufacturing of electrodes of lithium batteries, and preferably for lithium-ion batteries with gelled or liquid electrolyte or solid-state batteries.

### TECHNICAL BACKGROUND OF THE INVENTION

European patent application publication EP 3 444 869 A1 discloses a method for manufacturing electrode for lithium secondary battery including the steps of dry mixing a conductive material and an electrode active material, dry mixing the resultant mixture with a binder to obtain an electrode mixture powder which is directly applied to at least one surface of a current collector.

US patent application US 2021/0320288 A1 discloses a method for producing a dry film, wherein a dry powder mixture is processed into the dry film by a rolling device comprising a first roll and a second roll, the first roll having a higher rotational speed than the second roll and the dry film is mounted on the first roll.

International publication WO 2020/148410 A1 discloses a system for manufacturing a dry electrode for an energy storage device, comprising a first dry electrode material delivery system configured to deliver a dry electrode material, a first calendering roll, a second calendering roll configured to form a first nip between the first calendering roll and the second calendering roll, the first nip configured to receive the dry electrode material from the first dry electrode material delivery system, and form a dry electrode film from the dry electrode material; and a controller configured to control the rotational speed of the second calendering roll to be greater than the rotational speed of the first second calendering roll.

These existing solutions however lead to a low homogeneity of the film created in the nip of the rolls having different rotational speeds, when the powder mix is directly feed into the calendar nip. That is the reason why the inventors intended to develop a new continuous process where the homogeneity of the film is improved.

### DESCRIPTION OF THE INVENTION

According to a first embodiment, the invention therefore relates to a method for manufacturing a dry electrode for batteries, said method comprising the following steps:
- A step 1) of providing a dry electrode materials blend comprising at least one electrode active material, optionally at least one conductive material, at least one binder and optionally at least one co-binder;
- A step 2) of compressing said electrode materials blend provided at step 1) to form a primary film of said dry electrode materials blend,
- A step 3) of continuously calendering said primary film of dry electrode materials blend resulting from step 2), to form a calendered film of dry electrode materials blend ; and
- A step 4) of laminating said calendered film of dry electrode materials blend resulting from step 3) on at least one surface of a current collector to obtain the current collector coated on at least one of its surfaces, with said calendered film of dry electrode materials.

In the context of the present invention, the term: "dry electrode materials blend", used in step 1) of the method as defined above, means that said provided electrode materials blend is solvent free.

According to a preferred embodiment, the compression of said electrode materials blend implemented at step 2) of the method as defined above, is achieved at room temperature.

According to a particular embodiment, step 2) of the method as defined above, is implemented by feeding the electrode materials blend provided at step 1) to a feeding hopper, which is equipped with at least two discharge rolls. Such a feeding hopper is more particularly a gravimetric hopper.

According to another particular embodiment of the method as defined above, said at least two discharge rolls are working in a synchronized speed during step 2).

According to another particular embodiment of the method as defined above, said at least both discharge rolls are compressing systems working at room temperature.

According to another particular embodiment of the method as defined above, said primary film of said dry electrode materials blend resulting from step 2), has a thickness from 1 mm to 5 mm and more particularly from 1 mm to 3 mm.

The feeding of the electrode materials blend provided at step 1) in said feeding hopper used at step 2) of the method as defined above, is more particularly achieved by mean of a pneumatic conveyor. Such an hopper and such a pneumatic conveyor are commercially available.

In the context of the present invention, step 3) of the method as defined above, is mainly implemented by feeding said primary film of said dry electrode materials blend resulting from step 2), to a multiple rolls calender system.

In order to adjust the required parameters such as the feeding speed, the feeding of said primary film of said dry electrode materials blend resulting from step 2) to said rolls calender system, is more particularly achieved by mean of a conveyor belt.

According to another particular embodiment, the lamination step 4) is implemented on both faces of a current collector sheet, such as an aluminium foil or copper foil.

The dry electrode materials blend provided at step 1 of the method as defined above are preferably prepared by dry methods which does not involve the use of any solvent.

According to particular embodiment the dry electrode materials blend provided at step 1) of the method as defined above, is prepared by a dry one-pot method comprising the following steps:
- A step 1a) of providing the following powders:
   - A powder of at least one electrode active material,
   - Optionally, a powder of at least one conductive material,
   - A powder of at least one binder, and
   - Optionally a powder of at least one co-binder;
- A step 1b) of dry mixing together all the powders provided at step 1), to form a primary mixture of all these powders;
- A step 1c) of dry blending said primary mixture resulting from step 1b), for a sufficient time for the resulting mixture to be converted in the expected electrode materials blend as a sandy pasty product; and
- An optional step 1d) of dry blending said sandy pasty electrode materials blend resulting from step 1c), for a sufficient time to be progressively converted in the expected electrode materials blend as a powders blend.

In the above definition of the invention of the dry electrode materials blend preparation method, the term: "one pot", must be understood as meaning: "in a single container", in which all the steps of the above so-called one pot method are implemented and the term: "dry one-pot method", means that the said one-pot method is implemented in a solvent free manner. steps 1b) to 1d) said dry one-pot method as defined above, are implemented in one unique rotative tumbler blender equipped with rotative high shear blades.

When a dry cathode materials blend is used in said method for manufacturing a dry electrode for batteries as defined above, the said at least one cathode active material is mainly chosen from the group consisting of Li[Ni_{(1-x-y-z)}CoₓM¹_{y}M²_{z}]O₂ compounds, wherein M¹ and M² independently represents Al, Mg or Mn, the sum is strictly less than 1 and strictly greater than 0.5 [0.5<(1-x-y-z)<1]; examples of such compounds are Li[Ni_{0.6}Co_{0.2}Mn_{0.2}]O₂ (NMC 622), Li[Ni_{0.6}Co_{0.1}Mn_{0.3}]O₂ (NMC 631), Li[Ni_{0.8}Co_{0.1}Mn_{0.1}]O₂ (NMC 811), Li[Ni_{0.9}Co_{0.05}Mn_{0.05}]O₂ (NMC Ni90), Li[Ni_{0.82}Co_{0.11}Mn_{0.07}]O₂ (NMC Ni82), or Li[Ni_{0.81}Co_{0.15}Al_{0.04}]O₂. Said cathode active material is mixed with at least one conductive material, mainly chosen from the group consisting of graphite, carbon black, ketjen black, carbon nanotubes (CNTs) or a combination of two or more of them; said at least one binder is mainly chosen from the group consisting of fluorinated polymers, polyethylene or cellulose fibbers; example of binder for cathodes are PFTE, PVDF binders commercialized as Kynar^{™} binders such as Kynar^{™} HSV 1810.

When a dry anode materials blend is used in said method for manufacturing a dry electrode for batteries as defined above, said at least one anionic active material is mainly graphite or mixtures thereof such as porous carbon, lithium titanium oxide (LTO), silicon or silicon containing compounds such silicon carbide or silicon oxide; said anode active material is optionally mixed with at least one optional conductive material such as carbon black optionally in combination CNTs; said at least one binder is mainly chosen from the group consisting of fluorinated polymers, Polyethylene or cellulose fibres; examples of binder for anodes are PFTE, the carboxylated styrene butadiene copolymers commercialized as Licity^{™} binders or PVDF binders commercialized as Kynar^{™} binders such as Kynar^{™} HSV 1810.

In the dry one-pot method of preparation of the dry electrode materials blend provided at step 1) of the method as defined above, the mass ratio between the conductive material and the electrode active material is greater than 0 and less or equal to 1/9, such as less or equal to 1/19 and more particularly less or equal to 1/39 and the primary mixture resulting from step 1b) contains from 0,5 wt. % to 10 wt.%, preferably from 1.5 wt.% to 5 wt.% of said powder of said least one binder alone or in combined with said optional co-binder.

The hereinabove defined process generates the following advantages:
- A better control of the density, the porosity and the thickness of the electrode;
- A decrease of the friction with the rolls during the calendaring steps, that allows a corelative decrease of the consumed energy during the process;
- The system is more compact and cheaper before the calendaring step. The two first rolls are not heated and are synchronously driven;
- As the two first rolls are included in the feeder, the generated dust remains in the feeder and there is no dust dispersion around the calenders.

## Claims

1. A method for manufacturing a dry electrode for batteries, said method comprising the following steps:
- A step 1) of providing a dry electrode materials blend comprising at least one electrode active material, optionally at least one conductive material, at least one binder and optionally at least one co-binder;
- A step 2) of compressing said electrode materials blend provided at step 1) to form a primary film of said dry electrode materials blend,
- A step 3) of continuously calendering said primary film of dry electrode materials blend resulting from step 2), to form a calendered film of dry electrode materials blend; and
- A step 4) of laminating said calendered film of dry electrode materials blend resulting from step 3) on at least one surface of a current collector to obtain the current collector coated on at least one of its surfaces, with said calendered film of dry electrode materials.

2. A method according to claim 1, wherein the compression of said electrode materials blend implemented at step 2), is achieved at room temperature.

3. A method according to anyone of claims 1 or 2, wherein step 2) is implemented by feeding the electrode materials blend provided at step 1) to a feeding hopper, which is equipped with at least two discharge rolls.

4. A method according to claim 3, wherein said at least two discharge rolls are working in a synchronized speed during step 2).

5. A method according to anyone of claims 3 or 4, wherein said at least both discharge rolls are compressing systems working at room temperature.

6. A method according to anyone of claims 1 to 5 wherein said primary film of said dry electrode materials blend resulting from step 2), has a thickness from 1 mm to 5 mm.

7. A method according to anyone of claims 3 to 6, wherein the feeding of the electrode materials blend provided at step 1) in said feeding hopper used at step 2), is achieved by mean of a pneumatic conveyor.

8. A method according to anyone of claims 2 or 7, wherein step 3) is implemented by feeding said primary film of said dry electrode materials blend resulting from step 2), to a multiple rolls calender system.

9. A method according to any one of claims 2 to 8, wherein the feeding of said primary film of said dry electrode materials blend resulting from step 2) to said rolls calender system, is achieved by mean of a conveyor belt.

10. A method according to anyone of claims 1 to 9, wherein the lamination step 4) is implemented on both faces of a current collector sheet.

## Amended claims

### Amended claims in accordance with Rule 137(2) EPC.

1. A method for manufacturing a dry electrode for batteries, said method comprising the following steps:
A step 1) of providing a dry electrode materials blend comprising at least one electrode active material, optionally at least one conductive material, at least one binder and optionally at least one co-binder;
A step 2) of compressing said electrode materials blend provided at step 1) to form a primary film of said dry electrode materials blend having a thickness from 1 mm to 5 mm,
A step 3) of continuously calendering said primary film of dry electrode materials blend resulting from step 2), to form a calendered film of dry electrode materials blend; and
A step 4) of laminating said calendered film of dry electrode materials blend resulting from step 3) on at least one surface of a current collector to obtain the current collector coated on at least one of its surfaces, with said calendered film of dry electrode materials. contraire

2. A method according to claim 1, wherein the compression of said electrode materials blend implemented at step 2), is achieved at room temperature.

3. A method according to anyone of claims 1 or 2, wherein step 2) is implemented by feeding the electrode materials blend provided at step 1) to a feeding hopper, which is equipped with at least two discharge rolls.

4. A method according to claim 3, wherein said at least two discharge rolls are working in a synchronized speed during step 2).

5. A method according to anyone of claims 3 or 4, wherein said at least both discharge rolls are compressing systems working at room temperature.

6. A method according to anyone of claims 3 to 5, wherein the feeding of the electrode materials blend provided at step 1) in said feeding hopper used at step 2), is achieved by mean of a pneumatic conveyor.

7. A method according to anyone of claims 2 or 6, wherein step 3) is implemented by feeding said primary film of said dry electrode materials blend resulting from step 2), to a multiple rolls calender system.

8. A method according to any one of claims 2 to 7, wherein the feeding of said primary film of said dry electrode materials blend resulting from step 2) to said rolls calender system, is achieved by mean of a conveyor belt.

9. A method according to anyone of claims 1 to 8, wherein the lamination step 4) is implemented on both faces of a current collector sheet.
